# EUROPÄISCHE PATENTSCHRIFT

(11) **EP 1 625 321 B1**
(45) Veröffentlichungstag und Bekanntmachung des Hinweises auf die Patenterteilung: **09.04.2008**
(21) Anmeldenummer: 04732954.5
(22) Anmeldetag: 14.05.2004
(51) Int. Cl.: F16K 37/00, G01M 13/02, F04B 51/00

(54) **DIAGNOSESYSTEM UND -VERFAHREN FÜR EIN VENTIL, INSBESONDERE EIN RÜCKSCHLAGVENTIL EINER VERDRÄNGERPUMPE**
DIAGNOSTIC SYSTEM AND METHOD FOR A VALVE, ESPECIALLY A CHECK VALVE OF A POSITIVE DISPLACEMENT PUMP
SYSTEME ET PROCEDE DE DIAGNOSTIC POUR SOUPAPE, EN PARTICULIER POUR SOUPAPE DE NON RETOUR D'UNE POMPE VOLUMETRIQUE

(30) Priorität: 16.05.2003 DE 10322194
(43) Veröffentlichungstag der Anmeldung: 15.02.2006
(73) Patentinhaber: SIEMENS AKTIENGESELLSCHAFT, 80333 München (DE)
(72) Erfinder: ENS, Wolfgang, 76351 Linkenheim (DE); PÜTTMER, Alf, 76185 Karlsruhe (DE)
(86) Internationale Anmeldenummer: PCT/EP2004/005193
(87) Internationale Veröffentlichungsnummer: WO 2004/102052

(56) Entgegenhaltungen:
- EP-A- 0 410 317
- EP-A- 0 637 713
- EP-A- 1 184 570
- DE-A- 19 924 377
- PATENT ABSTRACTS OF JAPAN Bd. 2002, Nr. 06, 4. Juni 2002 (2002-06-04) & JP 2002 041143 A (CHIYODA CORP), 8. Februar 2002 (2002-02-08)

## Beschreibung

Die Erfindung betrifft ein Diagnosesystem sowie ein Diagnoseverfahren für ein Ventil, insbesondere ein Rückschlagventil einer Verdrängerpumpe, nach dem Oberbegriff des Anspruchs 1 bzw. dem Oberbegriff des Anspruchs 4.

In vielen Bereichen der Prozess- und Energietechnik hängt der störungsfreie Betrieb einer Anlage von der einwandfreien Funktion der eingesetzten Steuer- und Sperrventile ab. Zur Vermeidung kostenintensiver, irregulärer Betriebsunterbrechungen sollten Ventilschäden möglichst bereits im Anfangsstadium erkannt werden, das heißt bevor ein Ausfall eines Ventils einen Stillstand der Anlage verursachen kann. Beispielsweise führen defekte Ventilsitze zu Leckströmungen, die eine breitbandige Schallemission erzeugen. Eine Aufnahme und Auswertung der Schallemission eines Ventils kann somit zur Früherkennung von Ventilschäden dienen. Da Ventilfehler zu Schäden und teuren Folgekosten führen können, ist eine Diagnose evtl. mit automatischer Erfassung und programmierbarer Bewertung der Fehler von großem Nutzen. Statistische Auswertungen der Diagnosedaten können sowohl zur Optimierung der Wartungsprozesse für einen rechtzeitigen Ersatz eines schadhaften Ventils als auch zur qualitativen Beurteilung und Klassifizierung der Ventilhersteller oder zur Beurteilung der Eignung bestimmter Ventile für verschiedene Prozessarten dienen.

Aus der DE 199 24 377 A1 ist ein Diagnosesystem für ein von einem Stellungsregler über einen Antrieb betätigbares Ventil bekannt, das eine Einrichtung zur Erfassung, Speicherung und Auswertung von an dem Ventil gemessenen Körperschallspektren aufweist. Um eine besonders zuverlässige Ventildiagnose zu ermöglichen, ist in der Einrichtung zur Erfassung, Speicherung und Auswertung ein bei geringfügig geöffnetem, intaktem Ventil erfasstes Körperschallspektrum abspeicherbar. Zur Diagnose wird ein bei geschlossenem Ventil erfasstes Körperschallspektrum mit dem abgespeicherten verglichen und die Ähnlichkeit als ein Kriterium für die Undichtigkeit des Ventils herangezogen. Das bekannte Diagnoseverfahren hat den Nachteil, dass es eine exakte Positionierbarkeit des Schließkörpers erfordert, damit ein Vergleichspektrum bei geringfügig geöffnetem, intaktem Ventil zur Simulation einer Ventilleckage aufgenommen werden kann. Es ist daher bei einer Vielzahl von Ventilarten, beispielsweise bei Rückschlagventilen für Verdrängerpumpen, nicht anwendbar.

Aus der EP 0 637 713 A1 ist ein weiteres Diagnosesystem für Regel- und Absperrventile bekannt. Mit einem Körperschallaufnehmer wird der Schallpegel während des Ventilbetriebs gemessen. Dieser wird mit dem für den Gutzustand zuvor bei einem neuwertigen Ventil aufgenommenen und als Referenzwert abgespeicherten Schallpegel verglichen. Übersteigt die Abweichung zwischen aktuellen Zustand und Gutzustand einen vorgegebenen Grenzwert, so wird ein Alarm ausgelöst. Das bekannte Verfahren ist mit den folgenden Nachteilen verbunden:

Der im Gutzustand gemessene Schallpegel wird überwiegend durch Anlagengeräusche verursacht, die beispielsweise über Rohrverbindungen eingekoppelt werden. Diese können sich nach der Kalibrierung verändern. Werden sie größer, so wird möglicherweise ein Fehlalarm ausgelöst. Werden die Anlagengeräusche im Laufe der Betriebsdauer kleiner, führt dies zu einer Verringerung der Messempfindlichkeit, da der Schwellwert zu hoch vorgegeben wurde. Zudem bedeutet die Messung des Schallpegels im Gutzustand einen zusätzlichen Aufwand bei der Inbetriebnahme. Bei stark schwankenden Betriebsbedingungen des untersuchten Ventils kann das Diagnoseverfahren nicht eingesetzt werden, weil die Anlagengeräusche stark von den Betriebsbedingungen abhängen. Insbesondere bei Rückschlagventilen von Verdrängerpumpen ist das Verfahren unter diesen Umständen nicht anwendbar, da Messungen ergeben haben, dass das Anlagengeräusch vom Arbeitsdruck abhängt und bei einer Veränderung von 5 auf 50 bar um 20 dB steigt.

Aus der EP 1 184 570 A2 ist ein Diagnosesystem für Ventile eines Verdichters bekannt.

Ein weiteres System zur Ventildiagnose ist in der EP 0 410 317 A2 beschrieben.

Der Erfindung liegt die Aufgabe zugrunde, ein Diagnosesystem und ein Diagnoseverfahren zu schaffen, die weniger empfindlich auf Veränderungen des Anlagengeräuschs reagieren.

Zur Lösung dieser Aufgabe weist das neue Diagnosesystem der eingangs genannten Art die im kennzeichnenden Teil des Anspruchs 1 bzw. das Diagnoseverfahren die im kennzeichnenden Teil des Anspruchs 4 angegebenen Merkmale auf. In den abhängigen Ansprüchen sind vorteilhafte Weiterbildungen beschrieben.

Für eine zuverlässige Detektion einer Leckage werden das Leckagegeräusch bei geschlossenem Ventil und das Anlagengeräusch bei geöffnetem Ventil quasi zeitgleich aufgenommen und miteinander verglichen. Die beiden Messzeitpunkte können umso näher beieinander liegen, je kürzer der Abstand zwischen den beiden Zuständen "Ventil offen" und "Ventil geschlossen" ist. Im Sonderfall einer Anwendung des Diagnosesystems bei Rückschlagventilen in oszillierenden Verdrängerpumpen werden die Ventile periodisch geöffnet und geschlossen. Da die beiden Rückschlagventile zu bestimmten Zeiten genau gegensätzliche Zustände annehmen, kann am einen Ventil das Leckagegeräusch aufgenommen werden, während genau zeitgleich am jeweils anderen Ventil das Anlagengeräusch gemessen wird. Die Zuordnung der Geräusche zum jeweiligen Ventilzustand kann in einfacher Weise durch eine geeignete Signalverarbeitung erfolgen. Prinzipiell kann die Diagnose jedoch in diesem Anwendungsfall mit lediglich einem Körperschallsensor durchgeführt werden, der dann zeitlich nacheinander das Leckagegeräusch und das Anlagengeräusch im geschlossenen bzw. geöffneten Zustand desselben Ventils aufnimmt. Jedoch auch in diesem Fall hat das neue Diagnosesystem den Vorteil, dass es gegenüber schleichenden Veränderungen der Betriebsbedingungen weitgehend unempfindlich ist.

In entsprechender Weise können das neue Diagnosesystem und das neue Diagnoseverfahren bei Ventilen in Kolbenverdichtern angewendet werden, die nach einem weitgehend ähnlichen Prinzip arbeiten.

Eine besonders geringe Empfindlichkeit gegenüber auch stark schwankenden Betriebsbedingungen besitzt das Diagnosesystem, wenn der erste Wert und der zweite Wert der Kenngröße, die miteinander verglichen werden, anhand des zuletzt im geschlossenen bzw. im geöffneten Zustand aufgenommenen Schallsignals bestimmt werden. Es kann in diesem Fall davon ausgegangen werden, dass sich die Anlagengeräusche im dazwischen liegenden Zeitraum allenfalls gering verändert haben und somit das Diagnoseergebnis kaum beeinflussen.

Bei einer Anwendung des Systems zur Diagnose eines Rückschlagventils einer Verdrängerpumpe genügt in vorteilhafter Weise ein besonders geringer Aufwand für messtechnische Komponenten, wenn die Auswerteeinrichtung derart ausgebildet ist, dass durch sie anhand des aufgenommenen Schallsignals der jeweilige Zustand des Ventils bestimmbar ist. In diesem Fall sind keine weiteren Mittel zur Positionserfassung des Schließkörpers erforderlich. Das System kann mit lediglich einem Schallaufnehmer für eine Messstelle auskommen.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: eine Verdrängerpumpe mit einem Diagnosesystem mit zwei Körperschallaufnehmern,
- Figur 2: eine Verdrängerpumpe mit einem Diagnosesystem mit einem Körperschallaufnehmer,
- Figur 3: Verläufe von an der Verdrängerpumpe gemäß Figur 1 aufgenommenen Körperschallsignalen und
- Figur 4: anhand der Verläufe gemäß Figur 3 berechnete Schallpegel.

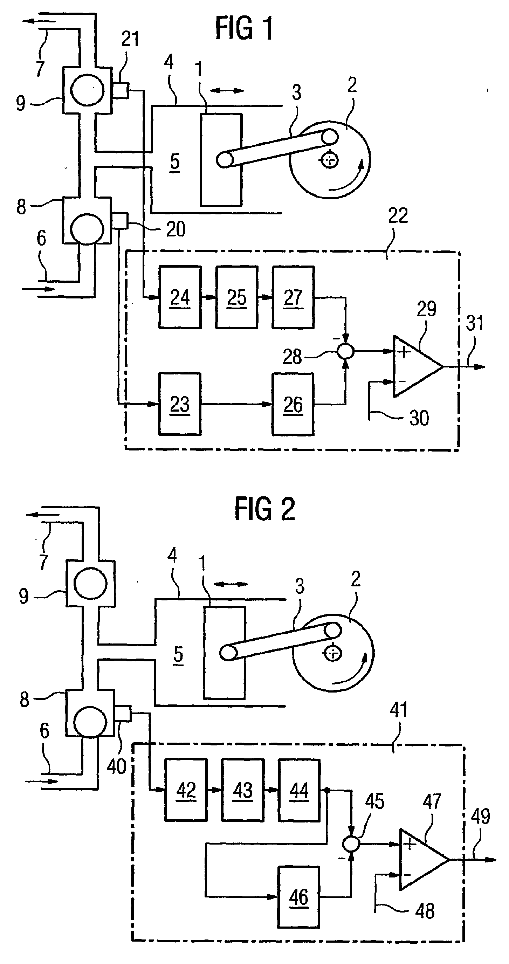

In den Figuren 1 und 2 ist jeweils eine Verdrängerpumpe mit ihrem prinzipiellen Aufbau dargestellt. Gleiche Teile sind mit gleichen Bezugszeichen versehen. Das Funktionsprinzip einer Verdrängerpumpe wird daher im Folgenden anhand des Beispiels in Figur 1 erläutert. Ein Kolben 1 wird durch eine Kurbelwelle 2 mit einem Pleuel 3 in einem Zylinder 4 abwechselnd nach links und rechts bewegt. Dadurch entsteht ein variables Volumen 5 im Zylinder 4. In einem Einlass 6 und in einem Auslass 7 zu diesem Volumen 5 sind jeweils Rückschlagventile 8 bzw. 9 angeordnet. Diese Rückschlagventile werden häufig auch als Einlass- bzw. Auslassventile bezeichnet. Verkleinert sich das Volumen 5 wie in der in Figur 1 dargestellten Phase, so öffnet das Rückschlagventil 9 und ein zu förderndes Medium strömt zum Auslass 7 hinaus. Gleichzeitig ist das Ventil 8 geschlossen. Bei einer Vergrößerung des Volumens 5 öffnet dagegen das Ventil 8, so dass das Medium in den Innenraum des Zylinders 4 einströmen kann. Das Ventil 9 verschließt den Auslass 7 und verhindert damit einen Rückfluss des bereits geförderten Mediums. In beiden Förderphasen ist somit ein Ventil geschlossen und das jeweils andere Ventil geöffnet. Der Wechsel zwischen diesen Zuständen erfolgt zyklisch mit weitgehend konstanter Periodendauer.

Weiterhin zeigt Figur 1 ein Diagnosesystem mit zwei Aufnehmern 20 und 21 für Körperschall, die am Ventil 8 bzw. 9 angeordnet sind. In einer Auswerteeinrichtung 22 werden die mit den Aufnehmern 20 und 21 erfassten Körperschallsignale zunächst einer Bandpassfilterung mit einem Filter 23 bzw. 24 unterzogen. Dadurch werden insbesondere die Schlaggeräusche eliminiert, die beim Aufprall der Schließkörper auf den Dichtungssitz entstehen. In dieser Filterung können zusätzlich ausgeprägte Resonanzfrequenzen der Anlage, in welcher sich die Ventile befinden, ausgeblendet werden. Das gefilterte Schallsignal des Ventils 9 wird einer Einrichtung 25 zur Bestimmung des Ventilzustands zugeführt, in welcher also festgestellt wird, ob das Ventil 9 gerade geschlossen oder geöffnet ist. Im geöffneten Zustand liefert der Körperschallsensor 21 im Wesentlichen das Anlagengeräusch, da das Medium frei durch das Ventil 9 hindurchströmen kann und somit durch die Strömung nur ein geringes Rauschen erzeugt wird. Ist das Ventil 9 dagegen in einer anderen Förderphase geschlossen, so wird das durch den Aufnehmer 21 erfasste Schallsignal bei einem defekten Ventil überwiegend durch die Leckageströmung verursacht, die dem Anlagengeräusch überlagert ist. Beispielsweise mittels Autokorrelation erkennt die Einrichtung 25 die Periodendauer des zyklischen Zustandwechsels und die jeweilige Förderphase. Die weitere Auswertung der Signale erfolgt in einer geeigneten, auf die Förderphasen synchronisierten Weise. Aus den gefilterten Schallsignalen des Aufnehmers 20 und 21 werden in nachfolgenden Einrichtungen 26 bzw. 27 die Schallpegel für das geschlossene Ventil 8 bzw. das geöffnete Ventil 9 berechnet. Die beiden berechneten Schallpegel werden durch eine Einrichtung 28 miteinander verglichen. Dabei dient der Schallpegel des geöffneten Ventils 9 als Referenzpegel. Er wird also vom Schallpegel des geschlossenen Ventils 8 subtrahiert. Die so erzeugte Differenz der beiden Schallpegel wird in einem Komparator 29 mit einem vorgebbaren Schwellwert 30 verglichen. Übersteigt die Differenz den vorgebbaren Schwellwert 30, so erzeugt der Komparator 29 ein Alarmsignal 31, das an eine in der Figur der Übersichtlichkeit wegen nicht dargestellte Leitstation weitergereicht wird, so dass geeignete Maßnahmen zur Behebung der Störung eingeleitet werden können.

Anstelle der Einrichtung 25 zur Bestimmung des Ventilzustands könnte dieser alternativ zum gezeigten Ausführungsbeispiel durch zusätzliche Aufnehmer erfasst werden. Beispielsweise könnte der Ventilzustand durch einen Stellungsgeber erfasst werden, wie er üblicherweise bei Regelventilen Verwendung findet. Da der Ventilzustand aber bereits anhand des Schallsignals selbst bestimmt werden kann, sind keinerlei zusätzliche Sensoren zur Bestimmung des Ventilzustands erforderlich.

Eine weitere alternative Ausführungsform ist in Figur 2 dargestellt. Hier wird lediglich ein Aufnehmer 40 für Körperschall verwendet, dessen aufgenommenes Schallsignal in einer Auswerteeinrichtung 41 verarbeitet wird. Ein Filter 42 und eine Einrichtung 43 zur Bestimmung des Ventilzustands können in gleicher Weise wie das bereits anhand Figur 1 beschriebene Filter 24 und die Einrichtung 25 ausgeführt werden. Entsprechendes gilt für die Berechnung des Schallpegels aus dem gefilterten Schallsignal in einer Einrichtung 44. Neben der direkten Zuführung des Werts des Schallpegels zur Vergleichseinrichtung 45 wird dieser Wert nun auch einer Verzögerungseinrichtung 46 zugeführt, in welcher der Wert abgespeichert und verzögert um eine halbe Periodendauer ausgegeben wird. Der aktuell berechnete Schallpegel, der bei geschlossenen Ventil 8 im Wesentlichen vom Leckagegeräusch herrührt, wird somit mit einem abgespeicherten Wert des Schallpegels in der Einrichtung 45 verglichen, der eine halbe Periode zuvor ermittelt wurde, somit dem Schallpegel bei geöffnetem Ventil 8 entspricht und überwiegend durch das Anlagengeräusch hervorgerufen wurde. Die Differenz zwischen dem aktuellen Schallpegel und dem abgespeicherten Referenzpegel wird wiederum einem Komparator 47 zugeführt, der diese Differenz mit einem vorgebbaren Schwellwert 48 vergleicht und bei Überschreiten ein Alarmsignal 49 erzeugt. Diese Ausführungsform hat den Vorteil, dass auf den zweiten Aufnehmer für Körperschall verzichtet werden kann.

Die anhand der Figuren 1 und 2 mit Funktionsblöcken dargestellten Auswerteeinrichtungen 22 und 41 werden in der Praxis durch eine Mikroprozessorschaltung mit einem geeigneten Auswerteprogramm realisiert. Selbstverständlich ist auch eine Realisierung mit analogen Bausteinen prinzipiell möglich.

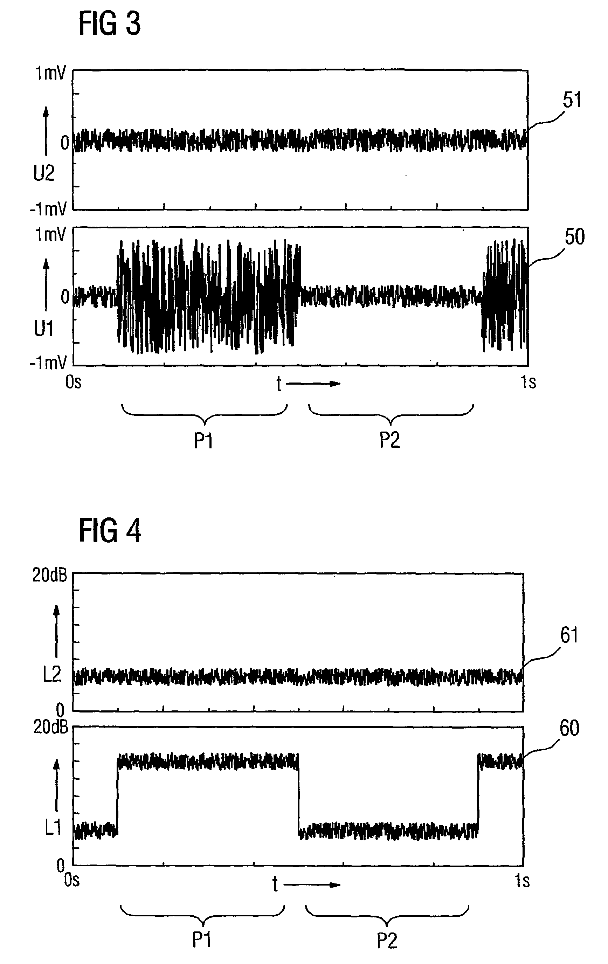

Figur 3 zeigt Verläufe 50 und 51 gefilterter Schallsignale, wie sie beispielsweise an einem intakten Ventil 8 (Figur 1) und einem defekten Ventil 9 (Figur 1) aufgenommen werden können. Auf der Abszisse ist die Zeit t in Sekunden, auf den Ordinaten sind jeweils die Amplitude U1 des einen Schallsignals und die Amplitude U2 des anderen Schallsignals in mV aufgetragen. Die Schallsignale haben einen im Wesentlichen periodisch wiederkehrenden Verlauf. Eine Periode beginnt beispielsweise mit einer Förderphase P1, in welcher das defekte Ventil 8 geschlossen und das intakte Ventil 9 geöffnet sind. Aufgrund des Leckagegeräuschs ist die am Ventil 8 gemessene Schallamplitude U1 erheblich höher als diejenige am Ventil 9. In der anderen Förderphase P2, in welcher das intakte Ventil 9 geschlossen und das defekte Ventil 8 geöffnet ist, herrscht im intakten Ventil 9 praktisch keine Leckageströmung und beide Signalverläufe entsprechen etwa dem Anlagengeräusch. Nach dem Ende der Förderphase P2 beginnt die nächste Periode mit einer weiteren Förderphase P1. Aufgrund dieser Periodizität ist in einfacher Weise eine Bestimmung des jeweiligen Ventilzustands anhand des aufgenommenen Schallsignals möglich.

Figur 4 zeigt zugehörige Verläufe 60 und 61 der berechneten Schallpegel L1 und L2, die auf den beiden Ordinaten in dB aufgetragen sind. Es sind dieselben Zeiträume dargestellt, die schon in Figur 3 betrachtet wurden. In der Förderphase P1 ist der Schallpegel L1 für das defekte Ventil 8 (Figur 1) wesentlich größer als der Schallpegel L2 des intakten Ventils 9 (Figur 1), der hier als Referenzpegel dient. Die Differenz übersteigt daher den vorgebbaren Schwellwert 30 (Figur 1) und ein Alarmsignal 31 (Figur 1) zur Anzeige eines defekten Ventils wird ausgegeben. In der Förderphase P2 wird dagegen der vorgegebene Schwellwert durch die Differenz zwischen den beiden Schallpegeln L1 und L2 nicht überschritten. Das Ventil 9 wird daher als intakt erkannt.

Anhand dieser Verläufe wird als Vorteil des neuen Diagnosesystems und -verfahrens deutlich, dass sich die Auswertung "selbstlernend" an die jeweils bestehenden Anlagenbedingungen anpasst, weil in jedem Arbeitszyklus der Ventile ein Referenzwert und ein Messwert berechnet werden. Dadurch wird die Parametrierung der Auswerteeinrichtung vereinfacht und das Diagnosesystem ist vorteilhaft bei stark veränderlichen Anlagengeräuschen einsetzbar. Dabei ist für ein diagnostiziertes Ventil auch nur ein Aufnehmer für Körperschall notwendig. Der jeweilige Zustand des Ventils, ob offen oder geschlossen, kann anhand des aufgenommenen Schallsignals ohne Weiteres ohne zusätzliche Messeinrichtungen ermittelt werden.

## Patentansprüche

1. Diagnosesystem für ein Ventil, insbesondere ein Rückschlagventil einer Verdrängerpumpe, mit zumindest einem Aufnehmer (20, 21) für Körperschall, mit einer Einrichtung (22) zur Auswertung zumindest eines aufgenommenen Körperschallsignals und mit Mitteln (25) zur Bestimmung des Ventilzustands, durch welche zumindest feststellbar ist, ob das Ventil (8, 9) im geöffneten oder geschlossenen Zustand ist, **dadurch gekennzeichnet,**
**dass** die Auswerteeinrichtung (22) dazu ausgebildet ist, einen ersten Wert einer Kenngröße (L1) eines im geschlossenen Zustand eines Ventils (8) aufgenommenen Schallsignals zu ermitteln, im Wesentlichen dazu zeitgleich einen zweiten Wert einer Kenngröße (L2) eines im geöffneten Zustand desselben Ventils (8) und/oder eines in einem vergleichbaren Umfeld betriebenen Ventils (9) aufgenommenen Schallsignals zu ermitteln und ein Signal (31) zur Anzeige einer Störung auszugeben, wenn die Abweichung des ersten Werts vom zweiten Wert einen vorgebbaren Schwellwert (30) übersteigt.

2. Diagnosesystem nach Anspruch 1, **dadurch gekennzeichnet, dass** die Auswerteeinrichtung (22) weiterhin dazu ausgebildet ist, den ersten und den zweiten Wert anhand des zuletzt im geschlossenen bzw. im geöffneten Zustand aufgenommenen Schallsignals zu bestimmen.

3. Diagnosesystem nach einem der Ansprüche 1 oder 2,
**dadurch gekennzeichnet,**
**dass** das Ventil ein Rückschlagventil einer Verdrängerpumpe ist und
**dass** die Auswerteeinrichtung dazu ausgebildet ist, anhand des aufgenommenen Schallsignals den jeweiligen Zustand des Ventils zu bestimmen.

4. Diagnoseverfahren für ein Ventil, insbesondere ein Rückschlagventil einer Verdrängerpumpe, mit zumindest einem Aufnehmer (20, 21) für Körperschall, mit einer Einrichtung (22) zur Auswertung zumindest eines aufgenommenen Körperschallsignals und mit Mitteln (25) zur Bestimmung des Ventilzustands, durch welche zumindest feststellbar ist, ob das Ventil (8, 9) im geöffneten oder geschlossenen Zustand ist, **dadurch gekennzeichnet, dass** ein erster Wert einer Kenngröße (L1) eines im geschlossenen Zustand eines Ventils (8) aufgenommenen Schallsignals ermittelt wird, dass im Wesentlichen dazu zeitgleich ein zweiter Wert einer Kenngröße (L2) eines im geöffneten Zustand desselben Ventils (8) und/oder eines in einem vergleichbaren Umfeld betriebenen Ventils (9) aufgenommenen Schallsignals ermittelt wird und dass ein Signal (31) zur Anzeige einer Störung ausgegeben wird, wenn die Abweichung des ersten Werts vom zweiten Wert einen vorgebbaren Schwellwert (30) übersteigt.

## Claims

1. Diagnostic system for a valve, especially a check valve of a positive displacement pump, with at least one solid-borne sound sensor(20, 21), with a device (22) for evaluation of at least one recorded solid-borne sound signal and with means (25) for determining the valve state, through which it can at least be established whether the valve (8, 9) is in the open or closed state, **characterised in that,**
a first value of a characteristic value (L1) of a sound signal recorded in the closed state of a valve (8) can be determined, essentially simultaneously with this, a second value of a characteristic value (L2) of a sound signal recorded in the open state of the same valve (8) and/or of a valve (9) operated in a comparable environment is determined and that a signal (31) can be output for displaying the fault if the deviation of the first value from the second value exceeds a predeterminable threshold value (30).

2. Diagnostic system in accordance with claim 1,
**characterised in that** the first value and the second value can be determined on the basis of the last sound signal recorded in the closed or the open state.

3. Diagnostic system in accordance with one of the claims 1 or 2,
**characterised in that**
the valve is a check valve of a positive displacement pump and the evaluation device is embodied such that the relevant state of the valve can be determined through it on the basis of the recorded sound signal.

4. Diagnostic method for a valve, especially a check valve of a positive displacement pump, with at least one solid-borne sound sensor (20, 21), with a device (22) for evaluation of at least one recorded solid-borne sound signal and with means (25) for determining the state of a valve, through which it can at least be determined whether the valve (8, 9) is in the open or the closed state, **characterised in that** a first value of a characteristic value (L1) of a sound signal recorded in the closed state of a valve (8) is determined, that essentially at the same time a second value of a characteristic value (L2) of a sound signal recorded in the open state of the same valve (8) and/or of a valve operated in a comparable environment (9) is determined, and that a signal (31) for displaying a fault is output if the deviation of the first value from the second value exceeds a predeterminable threshold value (30).

## Revendications

1. Système de diagnostic pour une soupape, notamment pour un clapet anti-retour d'une pompe volumétrique comprenant au moins un enregistreur (20, 21) du bruit de corps, un dispositif (22) d'exploitation d'au moins un signal de bruit de corps enregistré et des moyens (25) de détermination de l'état de la soupape, par lesquels on peut constater au moins si la soupape (8, 9) est à l'état ouvert ou à l'état fermé,
**caractérisé**
**en ce que** le dispositif (22) d'exploitation est constitué de façon à déterminer une première valeur d'une grandeur (L1) caractéristique d'un signal de bruit enregistré alors que la soupape (8) est fermée, à déterminer sensiblement à cet effet en même temps une deuxième valeur d'une grandeur (L2) caractéristique d'un signal de bruit enregistré alors que la même soupape (8) est à l'état ouvert et/ou d'une soupape (9) fonctionnant dans un environnement comparable et de manière à émettre un signal (31) d'indication d'une perturbation si l'écart entre la première valeur et la deuxième valeur dépasse une valeur (30) de seuil qui peut être prescrite.

2. Système de diagnostic suivant la revendication 1, **caractérisé en ce que** le dispositif (22) d'exploitation est en outre constitué de manière à déterminer la première et la deuxième valeurs au moyen du signal de bruit enregistré en dernier à l'état fermé et à l'état ouvert.

3. Système de diagnostic suivant la revendication 1 ou 2, **caractérisé en ce que** la soupape est un clapet anti-retour d'une pompe volumétrique, et
**en ce que** le dispositif d'exploitation est constitué de manière à déterminer l'état respectif de la soupape au moyen du signal de bruit enregistré.

4. Procédé de diagnostic d'une soupape, notamment d'un clapet anti-retour d'une pompe volumétrique, comprenant au moins un enregistreur (20, 21) du bruit de corps, un dispositif (22) d'exploitation d'au moins un signal de bruit de corps enregistré et des moyens (25) de détermination de l'état de la soupape, par lesquels on peut constater au moins si la soupape (8, 9) est à l'état ouvert ou à l'état fermé, **caractérisé en ce que** l'on détermine une première valeur d'une grandeur (L1) caractéristique d'un signal de bruit enregistré alors que la soupape (8) est fermée, **en ce que** l'on détermine sensiblement pour cela en même temps une deuxième valeur d'une grandeur (L2) caractéristique d'une même soupape (8) alors qu'elle est ouverte et/ou d'une soupape (9) fonctionnant dans un environnement comparable, et **en ce que** l'on émet un signal (31) pour indiquer une perturbation si l'écart entre la première valeur et la deuxième valeur dépasse une valeur (30) de seuil pouvant être prescrite.
